# EUROPEAN PATENT SPECIFICATION

(11) **EP 2 460 730 B1**
(45) Date of publication and mention of the grant of the patent: **06.02.2019**
(21) Application number: 11191829.8
(22) Date of filing: 02.12.2011
(51) Int. Cl.: B64D 41/00

(54) **Aircraft power distribution architecture**
Flugzeugstromverteilungsarchitektur
Architecture de distribution de puissance d'avion

(30) Priority: 02.12.2010 US 419010 P
(43) Date of publication of application: 06.06.2012
(73) Proprietor: Hamilton Sundstrand Corporation, Windsor Locks, CT 06096-1010 (US)
(72) Inventor: Bruno, Louis J., Ellington, CT Connecticut 06029 (US); Grell, Brandon M., Cherry Valley, IL Illinois 61016 (US); Vaziri, Massoud, Redmond, WA Washington 98052 (US); Krenz, Michael, Roscoe, IL Illinois 61073 (US); Finney, Adam M., Rockford, IL Illinois 61114 (US); Beecroft, Charles, San Diego, CA California 92130 (US); Zywiak, Thomas M., Suffield, CT Connecticut 06078 (US); Army, Donald E. Jr., Enfield, CT Connecticut 06082 (US); Kaslusky, Scott F., West Hartford, CT Connecticut 06119 (US); Wavering, Jeffrey T., Rockford, IL Illinois 61109 (US)
(74) Representative: Dehns

(56) References cited:
- WO-A1-99/00884
- WO-A1-99/41146
- US-A- 6 142 418
- US-A1- 2006 267 406
- US-A1- 2007 220 900
- US-A1- 2007 284 480
- US-A1- 2008 057 848
- US-A1- 2008 111 420
- US-A1- 2009 088 063
- US-A1- 2009 326 737

## Description

### TECHNICAL FIELD

The present disclosure relates to aircraft power distribution, and more particularly to aircraft power distribution architectures. Known forms of aircraft power distribution architectures can be found in, for example, WO 99/00884, US 6142418, US 2006/0267406, US 2009/0088063, US 2008/0111420, US 2009/0326737, US 2007/0284480 and WO 99/41146.

### BACKGROUND OF THE INVENTION

Modern aircraft include many systems and subsystems, each of which has varying power requirements. By way of example, some aircraft subsystems require pneumatic power, some require electric power, and some require hydraulic power. In order to reduce the weight of an aircraft, aircraft power distribution architectures are designed to reduce redundant subsystem and system power use.

### SUMMARY OF THE INVENTION

According to the present invention, there is provided an aircraft power distribution architecture for an aircraft including a plurality of aircraft systems comprising: an engine having a low spool compressor and a high spool compressor; an electric power distributor; an Auxiliary Power Unit (APU) coupled to said electric power distributor, and operable to provide power to said electric power distributor; a low pressure bleed connected to said APU, said low pressure bleed being operable to bleed air from said APU or from the aircraft engine, and operable to provide bleed air to a plurality of pneumatic aircraft systems; and an electric generator system coupled to said electric power distributor and operable to provide electric power to said electric power distributor, wherein said electric power distributor is further coupled to a plurality of aircraft systems that use electric power; characterized in that said engine comprises a low spool compressor and a high spool compressor interface, in that said low pressure bleed is suitable to be connected to both said low spool compressor and high spool compressor interface, and in that said low pressure bleed is operable to bleed air pressure from said low spool compressor and said high spool compressor interface according to claim 1.

### BRIEF DESCRIPTION OF THE DRAWINGS

Figure 1 illustrates a low pressure bleed aircraft power distribution architecture.
Figure 2 illustrates a first example of the low pressure bleed aircraft power distribution architecture of Figure 1.
Figure 3 illustrates a second example of the low pressure bleed aircraft power distribution architecture of Figure 1.
Figure 4 illustrates a third example of the low pressure bleed aircraft power distribution architecture of Figure 1.
Figure 5 illustrates a fourth example of the low pressure bleed aircraft power distribution architecture of Figure 1.
Figure 6 illustrates a more electric aircraft power distribution architecture.
Figure 7 illustrates a first example of the more electric aircraft power distribution architecture of Figure 6.
Figure 8 illustrates a second example of the more electric aircraft power distribution architecture of Figure 6.
Figure 9 illustrates a third example of the more electric aircraft power distribution architecture of Figure 6.
Figure 10 illustrates a fourth example of the more electric aircraft power distribution architecture of Figure 6.
Figure 11 illustrates a fifth example of the more electric aircraft power distribution architecture of Figure 6.

### DETAILED DESCRIPTION

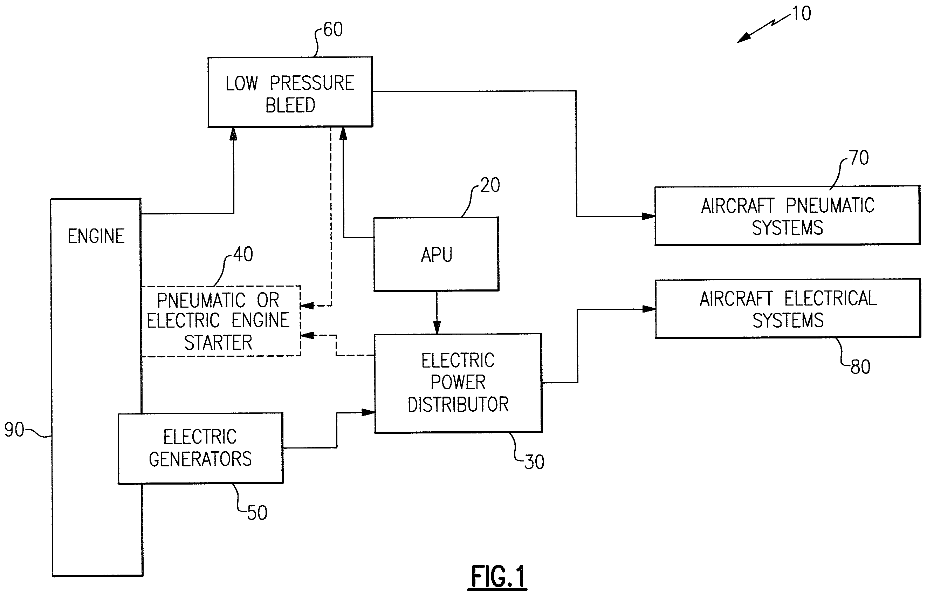

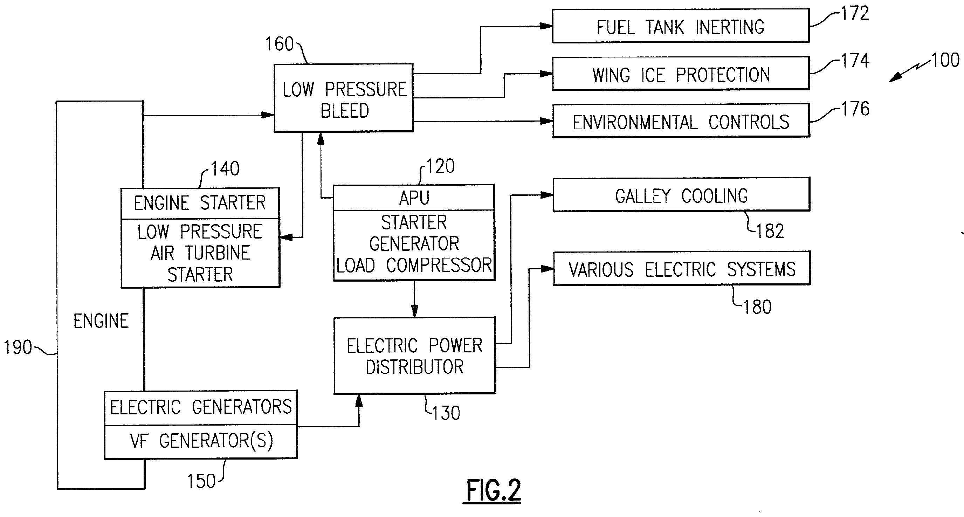

Figure 1 illustrates a low pressure bleed aircraft power distribution architecture 10, with more detailed examples illustrated in Figures 2-5. The aircraft power distribution architecture includes an Auxiliary Power Unit (APU) 20 that is connected to, and provides power to, an electric power distributor 30 when an aircraft engine 90 is off. The APU 20 is also connected to, and provides air pressure to, a low pressure bleed system 60. The electric power distributor 30 is connected to various aircraft electric systems 80, and provides operational electric power to the aircraft electric systems 80. The aircraft engine 90 is connected to a pneumatic or electric engine starter 40 and an electric generator system 50. The engine starter 40 is connected to either the low pressure bleed system 60 or the electric power distributor 30, depending on whether the engine starter is pneumatic or electric. During operation of the engine 90, the engine 90 causes the electric generators 50 to generate power. The electric generators 50 provide the power to the electric power distributor 30.

The low pressure bleed system 60 provides air from the APU 20 or from the aircraft engine 90 to multiple aircraft pneumatic systems 70 that operate under pneumatic power. The low pressure bleed 60 is connected to the aircraft engine 90 via a low spool compressor and a high spool compressor interface. The low spool compressor and high spool compressor interface allows the low pressure bleed 60 to bleed air pressure caused by the engine 90. The low pressure bleed 60 bleeds only the air pressure required to operate the aircraft pneumatic systems 70, rather than bleeding all of the excess air pressure from the engine 90. In some embodiments the engine starter 40 and the electric generators 50 are redundant, and a single set of components can be used as both the engine starter 40 and the electric generators 50.

A more detailed example of an aircraft power distribution architecture 100 corresponding to the aircraft power distribution architecture 10 illustrated in Figure 1 is illustrated in Figure 2. The example of Figure 2 includes an APU 120 having a variable frequency (VF) starter generator and a load compressor. As in the general example of Figure 1, the APU 120 provides power generated by the VF starter generator to power the electric power distributor 130 when an aircraft engine 190 is off. The electric power distributor 130 provides electric power to various electric systems 180, including a galley cooling system 182.

Air pressure from the load compressor in the APU 120 is collected by the low pressure bleed system 160 and is used to power an engine starter 140, to start the engine 190. The engine starter 140 is a low pressure air turbine starter that uses pressurized air as a power source. Alternately the engine starter can be any pneumatic engine starter. When the engine 190 is operating, electric generator(s) 150 provide power to the electric power distributor 130. In the example of Figure 2, the electric generator(s) 150 are VF generators.

The low pressure bleed 160 provides air pressure generated by the APU 120 load compressor when the engine is not operating or by the engine 190 during engine operation. The low pressure bleed 160 supplies air to operate a pneumatic fuel tank inerting system 172, a pneumatic wing ice protection system 174, and a pneumatic environmental control system 176. Additional pneumatic systems can be powered by the low pressure bleed 160. Since the pressure bleed is a low pressure bleed system 160, only a small portion of the air pressure generated by the engine 190 is bled. By way of example, the low pressure bleed system 160 can limit the air pressure provided to a pneumatic system, such as the environmental control system 176, to 10 psi (68.95 kPa) greater than the ambient cabin pressure of the environmental control system inlet.

Before the engine 190 has started, the electric power distributor 130 receives power from the starter generator on the APU 120. Once the engine 190 is started, the APU 120 switches off, and power is provided to the power distributor 130 via the electric generator(s) 150 which utilize rotation of the engine 190 to generate electric power. The aircraft power distribution architecture 100 includes various aircraft electric systems 180, such as a galley cooling system 182 that receives power from the electric power distributor 130.

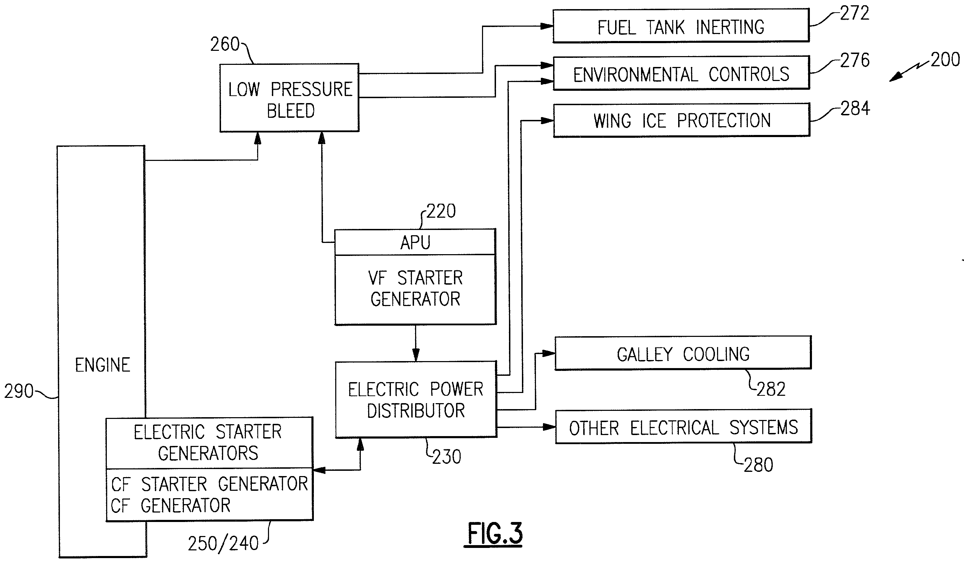

Figure 3 illustrates a second example of an aircraft power distribution architecture 200 corresponding to the aircraft power distribution architecture 10 illustrated in Figure 1. The example illustrated in Figure 3 includes an APU 220 having a variable frequency starter generator. The APU 220 provides electric power generated by the starter generator to an electric power distributor 230 when an aircraft engine 290 is off. The electric power distributor 130 distributes electric power to a galley cooling system 282, a wing ice protection system 284, a hybrid environmental control system 276, and other electrical systems 280. The wing ice protection system 284 illustrated in Figure 3 operates using only electric power.

The environmental control system 276 utilizes a combination of compressed air from the low pressure bleed 260 and an electric power provided from the power distributor 230 to provide aircraft cooling. The electric power can be used to power an electric compressor to augment the pressure provided to the hybrid environmental control system 276 or to power a vapor cycle system to minimize the air pressure required from the low pressure bleed 260. Alternate embodiments could utilize a hydraulic compressor in place of the electric compressor to provide the same effect.

The electric power distributor 230 is also connected to an electric generator system 240/250. A Constant Frequency (CF) engine starter in the electric generator system 240/250 utilizes power from the electric power distributor 230 to start an aircraft engine 290. Operation of the aircraft engine 290 causes electric generators, including the CF engine starter within the electric generator(s) 250 to generate power During operation of the engine 290, the electric generator(s) 250 provide power to the electric power distributor 230. As with the example of Figure 2, a low pressure bleed 260 draws air from the APU 220 when the engine 290 is not operating and from the engine 290 when the engine 290 is operating. The low pressure bleed 260 then provides pressurized air to a pneumatic fuel tank inerting system 272, and a hybrid environmental control system 276 that operates on both pneumatic and electric power.

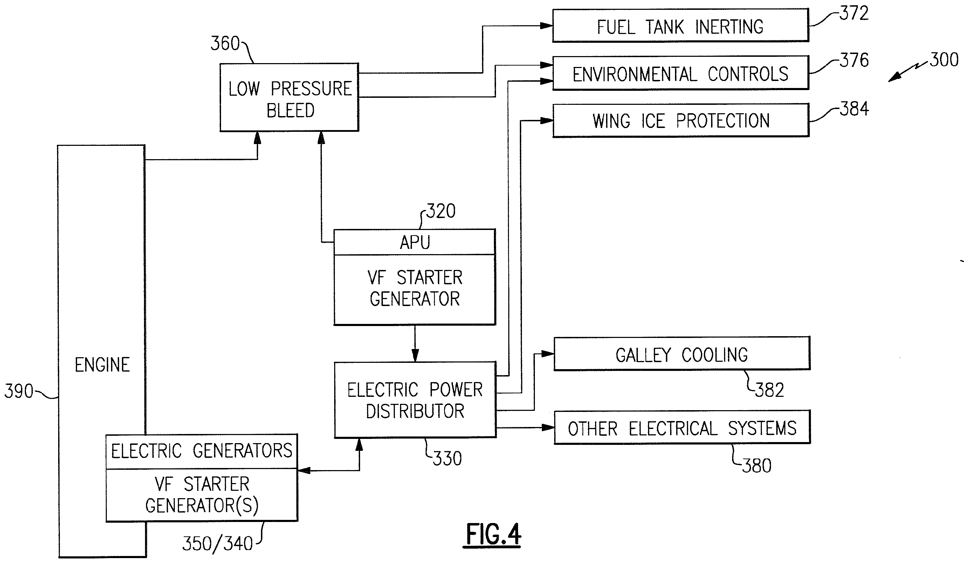

Figure 4 illustrates a third example of an aircraft power distribution architecture 300 corresponding to the aircraft power distribution architecture 10 illustrated in Figure 1. The aircraft power distribution architecture 300 illustrated in Figure 4 differs from the second example, illustrated in Figure 3, in that electric generator(s) 340/350 utilize VF starter generator(s) to start the engine 390 and to provide power to the electric power distributor 330. The aircraft power distribution architecture 300 of Figure 4 operates in the same manner as the aircraft power distribution architecture 200 of Figure 3, with similar numerals indicating similar elements.

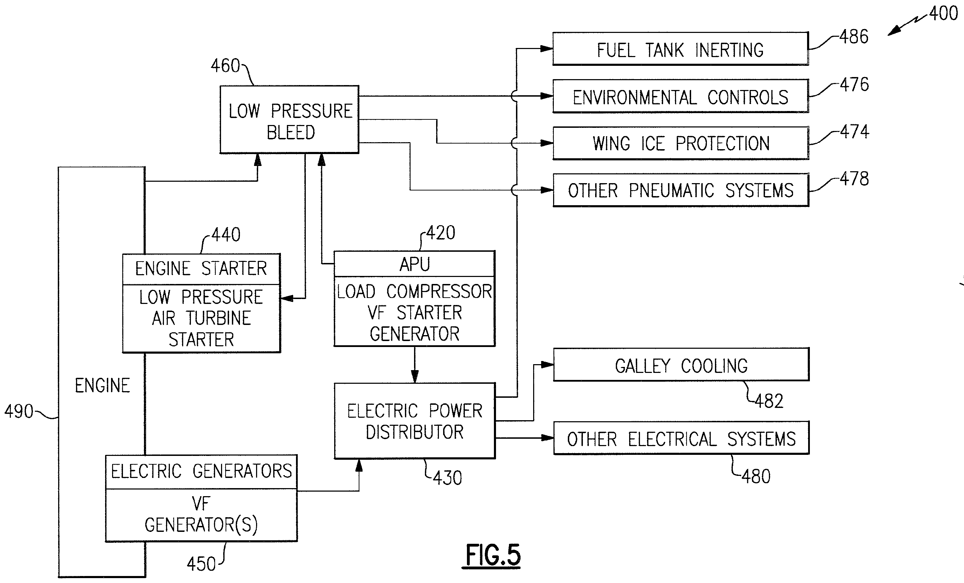

Figure 5 illustrates a fourth example of an aircraft power distribution architecture 400 corresponding to the aircraft power distribution architecture 10 illustrated in Figure 1. The aircraft power distribution architecture 400 of Figure 5 operates similar to the aircraft power distribution architecture 100 illustrated in Figure 2, in that the APU 420 includes a load compressor and a VF starter generator, the engine starter 440 is a low pressure turbine starter, power is obtained from the engine 490 using an electric generator system 450 having VF generators, and the low pressure bleed 460 bleeds excess air pressure from the APU 420 when the engine 490 is not operating and the low pressure bleed 460 bleeds excess air pressure from the engine 490 when the engine 490 is operating.

The aircraft power distribution architecture 400 illustrated in Figure 5 differs from the example illustrated in Figure 2 in that the fuel tank inerting system 486 of the aircraft architecture 400 includes an independent electric compressor, and thus requires only electric power to operate. As a result, the low pressure bleed 460 is not connected to the fuel tank inerting system 486, thereby reducing the amount of air pressure required from the low pressure bleed 460. Likewise, the electric power distributor 430 is connected to the fuel tank inerting system 486, the galley cooling system 482, and the other electric systems 480.

The aircraft power distribution architecture 400 of Figure 5 is additionally capable of including a pneumatic supercharger in the environmental control system 476 to augment the air pressure provided from the low pressure bleed 460. A pneumatic supercharger allows the environmental control system 476 to utilize less air pressure from the low pressure bleed 460 to generate the required power, thereby further reducing the air pressure bled from the APU 420 or from the engine 490.

Each of the above described examples (illustrated in Figures 2-5) relates to the example illustrated in Figure 1 and utilizes a low pressure bleed in combination with an electric generator system to provide power to aircraft components. In an alternate aircraft power distribution architecture, the pneumatic components are replaced with electric equivalents allowing for a more electric aircraft power distribution architecture.

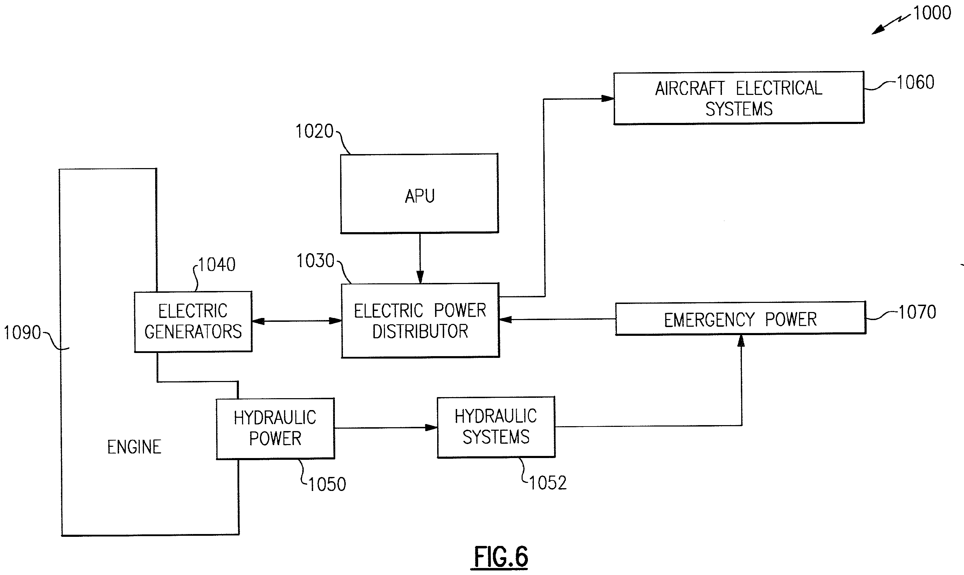

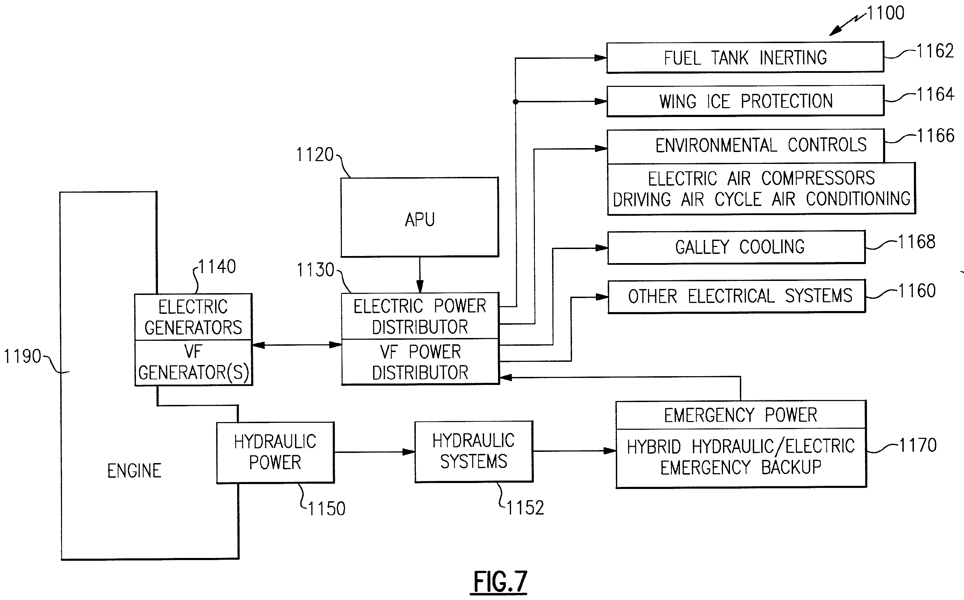

Figure 6 illustrates a more electric aircraft power distribution architecture 1000 that does not utilize pneumatically powered systems, with more detailed examples illustrated in Figures 7-11. The aircraft power distribution architecture includes an APU 1020 that provides power to an electric power distributor 1030 when an engine 1090 is not operating, and shuts off when the engine 1090 is operating.

During engine startup the electric power distributor 1030 provides power to a set of electric generators 1040 that function as aircraft engine 1090 starter generators. During operation of the engine 1090, the electric generators 1040 convert mechanical motion of the engine 1090 into electricity and provide power back to the electric power distributor 1030. The electric power distributor 1030 also provides electric power to aircraft electric systems 1060 at all times. The aircraft engine 1090 further includes a hydraulic power generator 1050 that uses mechanical movement within the engine 1090 to generate hydraulic power. The hydraulic power is provided to various aircraft hydraulic systems 1052 including a backup emergency power system 1070.

The backup emergency power system 1070 is connected to the electric power distributor 1030 and provides emergency backup power to the electric power distributor 1030 when both the APU 1020 and the electric generators 1040 are not providing power. The illustrated emergency backup power system 1070 uses a combination of both hydraulic power from the hydraulic power source 1050 and battery backup power source to provide emergency power.

Figure 7 illustrates a first example of a more electric power distribution architecture 1100 corresponding to the more electric power distribution architecture 1000 illustrated in Figure 6. The more electric aircraft architecture 1100 of Figure 7 includes an APU 1120 that provides power to an electric power distributor 1130 when an aircraft engine 1190 is not operating. The electric power distributor 1130 is a VF power distributor, and provides electric power to a fuel tank inerting system 1162, a wing ice protection system 1164, a galley cooling system 1168, and other electric systems 1160. By way of example, the VF power distributor can be an alternating current (AC) power distributor, such as a 230 VAC power distribution unit.

The electric power distributor 1130 also provides electric power to an environmental control system 1166. The environmental control system 1166 includes four electric air compressors that drive an air cycle based air conditioning system. Alternately, a different number of electric air compressors can be utilized to drive the air cycle based air conditioning system, depending on the requirements of the particular aircraft and the particular environmental control system 1166.

The more electric power distribution architecture of Figure 7 further includes a hydraulic power generator 1150 that uses engine 1190 operations to generate hydraulic power and provide the hydraulic power to the aircraft hydraulic systems 1152. Included in the aircraft hydraulic systems 1152 is a hydraulic based emergency power unit 1170. The emergency power unit 1170 provides emergency backup power to the electric power distributor 1130 in the case that both the APU 1120 and the electric generators 1140 are not providing power.

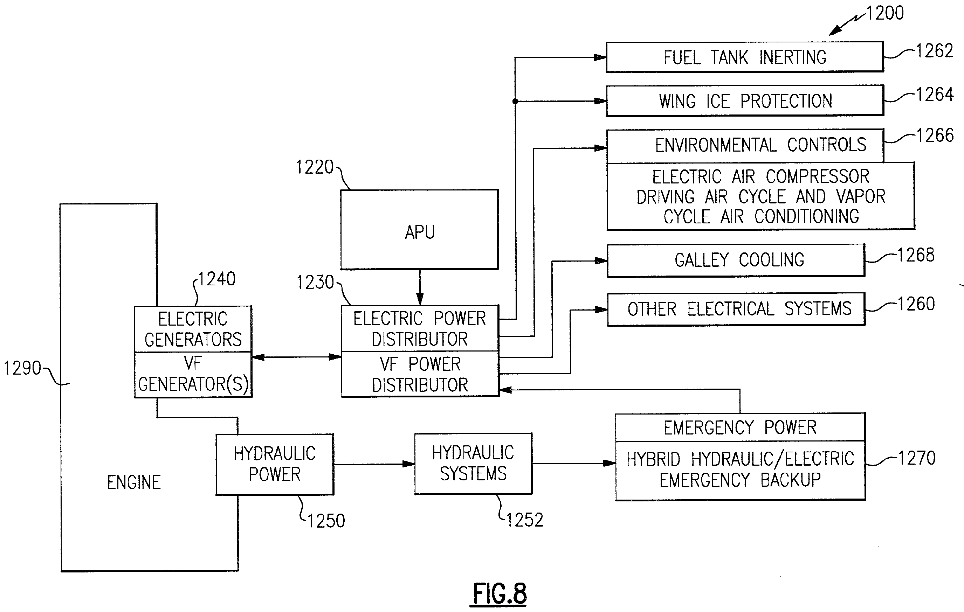

Figure 8 illustrates a second example more electric power distribution architecture 1200 similar to the one illustrated in Figure 6. The example illustrated in Figure 8 is identical to the example illustrated in Figure 7, with one exception. The environmental control system 1266 of Figure 8 utilizes electric air compressors to drive both an air cycle air conditioning system and a vapor cycle air conditioning system rather than driving only an air cycle based air conditioning system, as in the more electric power distribution architecture of Figure 7.

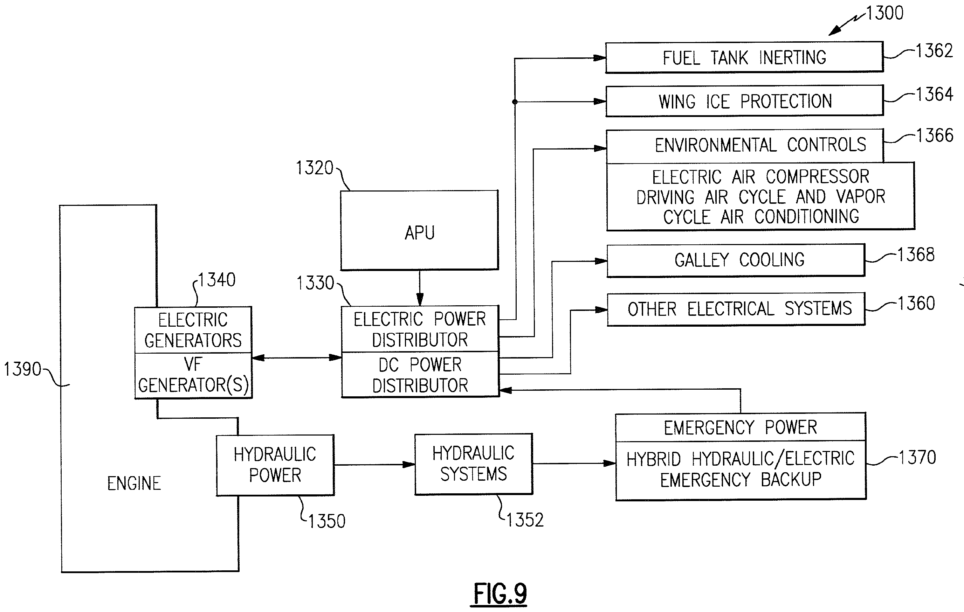

Figure 9 illustrates a third example more electric power distribution architecture 1300. The example of Figure 9 is identical to the example of Figure 8, with the exception of the electric power distributor 1330. The electric power distributor 1330 of the more electric power distribution architecture 1300 illustrated in Figure 9 is a direct current (DC) power distributor instead of a VF power distributor. By way of example, the DC power distributor 1330 can be a +/- 270 VDC power distribution unit that distributes DC power to the aircraft electric systems 1362, 1364, 1366, 1368, 1360. Utilizing a DC power distributor 1330 allows each of the electric systems 1362, 1364, 1366, 1368, 1360 that operate on DC power to omit an AC/DC converter, thereby reducing weight. Power received by the electric power distributors 1230, 1330 of Figures 8 and 9 from the emergency power 1270, 1370 can be of the same type (AC or DC) via the inclusion of an appropriate power converter in the electric power distributor 1230, 1330.

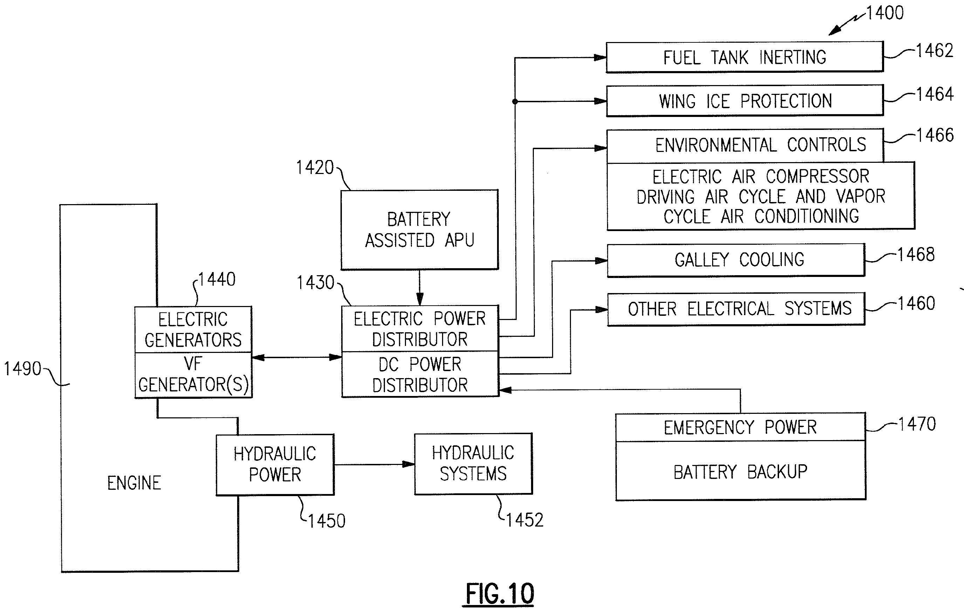

Figure 10 illustrates a fourth example more electric power distribution architecture 1400. The example of Figure 10 differs from Figure 9 in both the APU 1420 and the emergency power system 1470, but is otherwise identical to the example of Figure 9. The APU 1420 in the example of Figure 10 is a battery assisted APU. The battery assist allows a battery to provide supplemental power to the APU 1420 when the generator portion of the APU 1420 provides insufficient power to meet the load requirement on the APU 1420. The emergency power system 1470 of the example of Figure 10 uses a battery backup rather than the hydraulic power generation illustrated in the previous examples of Figures 7, 8 and 9. The battery backup allows the emergency power unit 1470 to be fully independent of other aircraft systems, and allows backup power to be provided to the power distributor 1430 in the case that hydraulic and electric power fails.

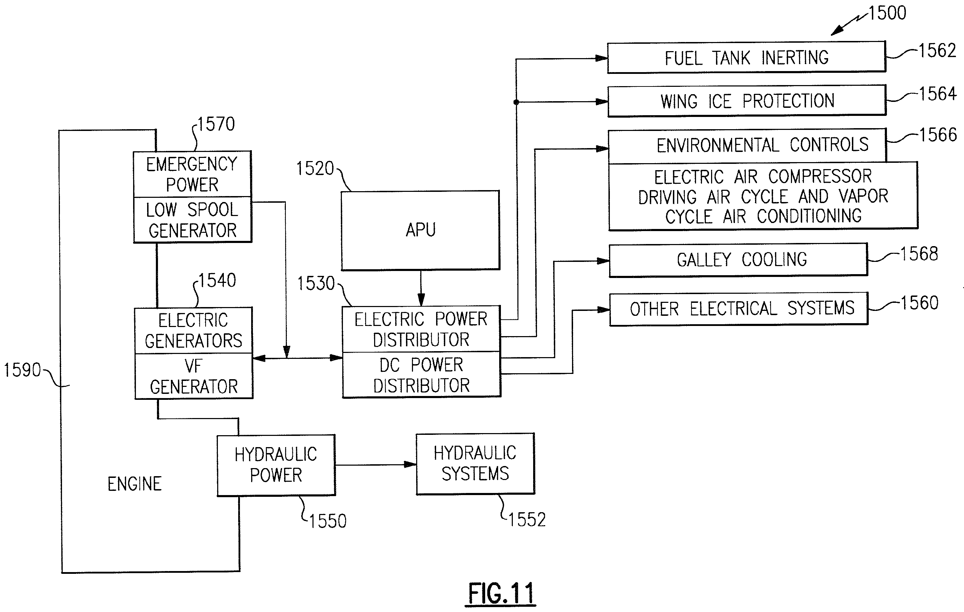

Figure 11 illustrates a fifth example more electric aircraft power distribution architecture 1500. The aircraft power distribution architecture of Figure 11 is similar to the example illustrated in Figure 9 in both operation and structure. However, the example more electric power distribution architecture 1500 of Figure 11 utilizes a low spool generator connected to the aircraft engine 1590 as the emergency power unit 1570 instead of the hydraulic based emergency backup power unit 1370 of the example more electric power distribution architecture 1300 of figure 9. Utilization of a low spool generator as the emergency power unit 1570 also allows the more electric power distribution architecture 1500 to reduce the number of VF generators used in the electric generators 1540 to one VF generator instead of two or more, as the emergency power unit 1570 can continuously provide power to the electric power distributor 1530 without affecting the ability of the low spool generator to provide emergency power in the case of a shutdown of the APU 1520 and the electric generators 1540.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An aircraft power distribution architecture (10; 100; 200; 300; 400) for an aircraft including a plurality of aircraft systems (70, 80; 172, 174, 176, 180, 182; 272, 276, 280, 282, 284; 372, 376, 380, 382, 384; 474, 476, 478, 480, 482, 486) comprising:
an engine (90; 190; 290; 390; 490) having a low spool compressor and a high spool compressor;
an electric power distributor (30; 130; 230; 330; 430);
an Auxiliary Power Unit (APU) (20; 120; 220; 320; 420) coupled to said electric power distributor (30; 130; 230; 330; 430), and operable to provide power to said electric power distributor (30; 130; 230; 330; 430);
a low pressure bleed (60; 160; 260; 360; 460) connected to said APU (20; 120; 220; 320; 420), said low pressure bleed (60; 160; 260; 360; 460) being operable to bleed air from said APU (20; 120; 220; 320; 420) or from the aircraft engine (90; 190; 290; 390; 490), and operable to provide bleed air to a plurality of pneumatic aircraft systems (70; 172, 174, 176; 272, 276; 372, 376; 474, 476, 478); and
an electric generator system (50; 150; 250; 350; 450) coupled to said electric power distributor (30; 130; 230; 330; 430) and operable to provide electric power to said electric power distributor (30; 130; 230; 330; 430), wherein said electric power distributor (30; 130; 230; 330; 430) is further coupled to a plurality of aircraft systems (80; 180, 182; 280, 282, 284; 380, 382, 384; 480, 482, 486) that use electric power;
**characterized in that** said engine (90; 190; 290; 390; 490) comprises a low spool compressor and a high spool compressor interface,
**in that** said low pressure bleed (60; 160; 260; 360; 460) is suitable to be connected to both said low spool compressor and high spool compressor interface,
and **in that** said low pressure bleed (60; 160; 260; 360; 460) is operable to bleed air pressure from said low spool compressor and said high spool compressor interface.

2. The aircraft power distribution architecture of claim 1, wherein said electric generator system comprises at least one Variable Frequency (VF) starter generator (150; 350; 450) operable to receive power from said electric power distributor (130; 330; 430) and operable to start said engine (190; 390; 490); or wherein said electric generator system comprises at least one Constant Frequency (CF) starter generator (250) operable to receive power from said electric power distributor (230) and operable to start said engine (290).

3. The aircraft power distribution architecture of claim 1, wherein said APU (120) further comprises a load compressor and an APU starter generator, wherein said load compressor is operable to provide compressed air to said low pressure bleed system, and said APU starter generator is operable to provide electric power to said electric power distributor (130); preferably wherein said low pressure bleed (160) is further connected to a low pressure air turbine starter (140) operable to pneumatically start said engine (190), and wherein said low pressure bleed (160) is operable to provide air pressure to said low pressure air turbine starter (140); further preferably comprising an environmental control system (176) pneumatically connected to said low pressure bleed (160), wherein said environmental control system (176) is at least partially pneumatically powered; more preferably wherein said low pressure bleed (160) is operable to provide a low air pressure, preferably at most ten pounds per square inch (psi) (69 kPa) above ambient cabin pressure at the environmental control system inlet, to said environmental control system (176); and/or wherein said environmental control system (176) further comprises an electric compressor or an air driven compressor or a hydraulic compressor operable to augment an amount of air pressure received from said low pressure bleed (160).

4. The aircraft power distribution architecture of claim 1, 2, or 3, further comprising an at least partially pneumatic fuel tank inerting system (172; 272; 372) pneumatically connected to said low pressure bleed (160; 260; 360) and operable to receive air pressure from said low pressure bleed (160; 260; 360); preferably wherein said at least partially pneumatic fuel tank inerting system is further electrically connected to said electric power distribution system.

5. The aircraft power distribution architecture of claim 1, 2, 3, or 4, further comprising a pneumatic wing ice protection system (174; 474) pneumatically connected to said low pressure bleed (160; 460) and operable to receive air pressure from said low pressure bleed (160; 460).

## Patentansprüche

1. Flugzeugstromverteilungsarchitektur (10; 100; 200; 300; 400) für ein Flugzeug, das eine Vielzahl von Flugzeugsystemen (70; 80; 172; 174; 176; 180; 182; 272; 276; 280; 282; 284; 372; 376; 380; 382; 384; 474; 476; 478; 480; 482; 486) beinhaltet, Folgendes umfassend:
ein Triebwerk (90; 190; 290; 390; 490), das einen Niederspulenkompressor und einen Hochspulenkompressor aufweist; einen elektrischen Stromverteiler (30; 130; 230; 330; 430); eine Hilfskrafteinheit (Auxiliary Power Unit - APU) (20; 120; 220; 320; 420), die an den elektrischen Stromverteiler (30; 130; 230; 330; 430) gekoppelt ist und bedienbar ist, um Strom für den elektrischen Stromverteiler (30; 130; 230; 330; 430) bereitzustellen;
eine Niederdruckentlüftung (60; 160; 260; 360; 460), die mit der APU (20; 120; 220; 320; 420) verbunden ist, wobei die Niederdruckentlüftung (60; 160; 260; 360; 460) bedienbar ist, um Luft aus der APU (20; 120; 220; 320; 420) oder von dem Flugzeugtriebwerk (90; 190; 290; 390; 490) abzulassen, und bedienbar ist, um Zapfluft für eine Vielzahl von pneumatischen Flugzeugsystemen (70; 172; 174; 176; 272; 276; 372; 376; 474; 476; 478) bereitzustellen; und
ein elektrisches Generatorsystem (50; 150; 250; 350; 450), das an den elektrischen Stromverteiler (30; 130; 230; 330; 430) gekoppelt ist und bedienbar ist, um elektrischen Strom für den elektrischen Stromverteiler (30; 130; 230; 330; 430) bereitzustellen, wobei der elektrische Stromverteiler (30; 130; 230; 330; 430) ferner an eine Vielzahl von Flugzeugsystemen (80; 180; 182; 280; 282; 284; 380; 382; 384; 480; 482; 486) gekoppelt ist, die elektrischen Strom verwenden;
**dadurch gekennzeichnet, dass** das Triebwerk (90; 190; 290; 390; 490) eine Niederspulenkompressor- und eine Hochspulenkompressorschnittstelle aufweist,
dass die Niederdruckentlüftung (60; 160; 260; 360; 460) geeignet ist, um sowohl mit der Niederspulenkompressor- als auch mit der Hochspulenkompressorschnittstelle verbunden zu werden,
und dass die Niederdruckentlüftung (60; 160; 260; 360; 460) bedienbar ist, um Luftdruck von der Niederspulenkompressor- und der Hochspulenkompressorschnittstelle abzulassen.

2. Flugzeugstromverteilungsarchitektur nach Anspruch 1, wobei das elektrische Generatorsystem mindestens einen Startergenerator mit veränderbarer Frequenz (VF) (150; 350; 450) umfasst, der bedienbar ist, um Strom von dem elektrischen Stromverteiler (130; 330; 430) zu empfangen, und bedienbar ist, um das Triebwerk (190; 390; 490) zu starten; oder wobei das elektronische Generatorsystem mindestens einen Startergenerator mit konstanter Frequenz (Constant Frequency - CF) (250) umfasst, der bedienbar ist, um Strom von dem elektrischen Stromverteiler (230) zu empfangen, und bedienbar ist, um das Triebwerk (290) zu starten.

3. Flugzeugstromverteilungsarchitektur nach Anspruch 1, wobei die APU (120) ferner einen Lastkompressor und einen APU-Startergenerator umfasst, wobei der Lastkompressor bedienbar ist, um komprimierte Luft für das Niederdruckentlüftungssystem bereitzustellen, und der APU-Startergenerator bedienbar ist, um elektrischen Strom für den elektrischen Stromverteiler (130) bereitzustellen; wobei vorzugsweise die Niederdruckentlüftung (160) ferner mit einem Niederdruckluftturbinenanlasser (140) verbunden ist, der bedienbar ist, um das Triebwerk (190) pneumatisch zu starten, und wobei die Niederdruckentlüftung (160) bedienbar ist, um Luftdruck für den Niederdruckluftturbinenstarter (140) bereitzustellen; wobei vorzugsweise ein Klimaregelungssystem (176) umfasst ist, das pneumatisch mit der Niederdruckentlüftung (160) verbunden ist, wobei das Klimaregelungssystem (176) mindestens teilweise pneumatisch betrieben wird; wobei vorzugsweise besonders die Niederdruckentlüftung (160) bedienbar ist, um einen niedrigen Luftdruck, vorzugsweise höchstens 69 kPa (zehn Psi) über dem Umgebungskabinendruck an dem Einlass des Klimaregelungssystems, für das Klimaregelungssystem (176) bereitzustellen; und/oder wobei das Klimaregelungssystem (176) ferner einen elektrischen Kompressor oder einen luftangetriebenen Kompressor oder einen hydraulischen Kompressor umfasst, der bedienbar ist, um die Menge an Luftdruck zu erhöhen, die von der Niederdruckentlüftung (160) empfangen wird.

4. Flugzeugstromverteilungsarchitektur nach Anspruch 1, 2 oder 3, die ferner ein mindestens teilweise pneumatisches System zur Inertisierung des Treibstofftanks (172; 272; 372) umfasst, das pneumatisch mit der Niederdruckentlüftung (160; 260; 360) verbunden ist und bedienbar ist, um Luftdruck von der Niederdruckentlüftung (160; 260; 360) zu empfangen; wobei vorzugsweise das mindestens teilweise pneumatische System zur Inertisierung des Treibstofftanks ferner elektrisch mit dem Stromverteilungssystem verbunden ist.

5. Flugzeugstromverteilungsarchitektur nach Anspruch 1, 2, 3, oder 4, die ferner ein pneumatisches Schutzsystem gegen Flügelvereisung (174; 474) umfasst, das pneumatisch mit der Niederdruckentlüftung (160; 460) verbunden ist und bedienbar ist, um Luftdruck an der Niederdruckentlüftung (160; 460) zu empfangen.

## Revendications

1. Architecture de distribution de puissance d'aéronef (10 ; 100 ; 200 ; 300 ; 400) pour un aéronef incluant une pluralité de systèmes d'aéronef (70, 80 ; 172, 174, 176, 180, 182 ; 272, 276, 280, 282, 284 ; 372, 376, 380, 382, 384 ; 474, 476, 478, 480, 482, 486) comprenant :
un moteur (90 ; 190 ; 290 ; 390 ; 490) ayant un compresseur à bobine inférieure et un compresseur à bobine supérieure ;
un distributeur de puissance électrique (30 ; 130 ; 230 ; 330 ; 430) ;
un groupe auxiliaire de puissance (GAP) (20 ; 120 ; 220 ; 320 ; 420) couplé audit distributeur de puissance électrique (30 ; 130 ; 230 ; 330 ; 430) et pouvant fonctionner pour fournir une puissance audit distributeur de puissance électrique (30 ; 130 ; 230 ; 330 ; 430) ;
une purge basse pression (60 ; 160; 260 ; 360 ; 460) connectée audit GAP (20 ; 120 ; 220 ; 320 ; 420), ladite purge basse pression (60 ; 160 ; 260 ; 360 ; 460) pouvant fonctionner pour évacuer de l'air dudit GAP (20 ; 120 ; 220 ; 320; 420) ou du moteur d'aéronef (90 ; 190 ; 290 ; 390 ; 490) et pouvant fonctionner pour fournir de l'air de purge à une pluralité de systèmes d'aéronef pneumatiques (70 ; 172, 174, 176 ; 272, 276 ; 372, 376 ; 474, 476, 478) ; et
un système de générateur électrique (50 ; 150 ; 250 ; 350 ; 450) couplé audit distributeur de puissance électrique (30 ; 130 ; 230 ; 330 ; 430) et pouvant fonctionner pour fournir une puissance électrique audit distributeur de puissance électrique (30 ; 130 ; 230 ; 330 ; 430), dans laquelle ledit distributeur de puissance électrique (30 ; 130 ; 230 ; 330 ; 430) est en outre couplé à une pluralité de systèmes d'aéronef (80 ; 180, 182 ; 280, 282, 284 ; 380, 382, 384 ; 480, 482, 486) qui utilisent une puissance électrique ;
**caractérisé en ce que** ledit moteur (90 ; 190 ; 290 ; 390 ; 490) comprend un compresseur à bobine inférieure et une interface de compresseur à bobine supérieure,
**en ce que** ladite purge basse pression (60 ; 160 ; 260 ; 360 ; 460) est adéquate pour être connectée à la fois auxdits compresseur à bobine inférieure et interface de compresseur à bobine supérieure,
et **en ce que** ladite purge basse pression (60 ; 160 ; 260 ; 360 ; 460) peut fonctionner pour évacuer une pression d'air dudit compresseur à bobine inférieure et de ladite interface de compresseur à bobine supérieure.

2. Architecture de distribution de puissance d'aéronef selon la revendication 1, dans laquelle ledit système de générateur électrique comprend au moins un générateur de démarreur à fréquence variable (FV) (150; 350; 450) pouvant fonctionner pour recevoir une puissance à partir dudit distributeur de puissance électrique (130 ; 330 ; 430) et pouvant fonctionner pour démarrer ledit moteur (190; 390; 490); ou dans laquelle ledit système de générateur électrique comprend au moins un générateur de démarreur à fréquence constante (FC) (250) pouvant fonctionner pour recevoir une puissance à partir dudit générateur de puissance électrique (230) et pouvant fonctionner pour démarrer ledit moteur (290).

3. Architecture de distribution de puissance d'aéronef selon la revendication 1, dans laquelle ledit GAP (120) comprend en outre un compresseur de charge et un générateur de démarreur de GAP, dans laquelle ledit compresseur de charge peut fonctionner pour fournir de l'air comprimé audit système de purge basse pression, et ledit générateur de démarreur de GAP peut fonctionner pour fournir une puissance électrique audit distributeur de puissance électrique (130) ; de préférence dans laquelle ladite purge basse pression (160) est en outre connectée à un démarreur de turbine à air basse pression (140) pouvant fonctionner pour démarrer de manière pneumatique ledit moteur (190), et dans laquelle ladite purge basse pression (160) peut fonctionner pour fournir une pression d'air audit démarreur de turbine à air basse pression (140) ; comprenant en outre de préférence un système de contrôle d'environnement (176) connecté de manière pneumatique à ladite purge basse pression (160), dans laquelle ledit système de contrôle d'environnement (176) est actionné au moins partiellement de manière pneumatique ; plus préférablement dans lequel ladite purge basse pression (160) peut fonctionner pour fournir une basse pression d'air, de préférence au moins dix livres par pouce carré (psi) (69 kPa) au-dessus d'une pression de cabine ambiante au niveau de l'orifice d'entrée de système de contrôle d'environnement, audit système de contrôle d'environnement (176) ; et/ou dans lequel ledit système de contrôle d'environnement (176) comprend en outre un compresseur électrique ou un compresseur à entraînement à air ou un compresseur hydraulique pouvant fonctionner pour augmenter une pression d'air reçue en provenance de ladite purge basse pression (160).

4. Architecture de distribution de puissance d'aéronef selon la revendication 1, 2 ou 3, comprenant en outre un système d'inertage de réservoir de carburant au moins partiellement pneumatique (172 ; 272 ; 372) connecté de manière pneumatique à ladite purge basse pression (160 ; 260 ; 360) et pouvant fonctionner pour recevoir une pression d'air en provenance de ladite purge basse pression (160 ; 260 ; 360) ; de préférence dans laquelle ledit système d'inertage de réservoir de carburant au moins partiellement pneumatique est en outre connecté électriquement audit système de distribution de puissance électrique.

5. Architecture de distribution de puissance d'aéronef selon la revendication 1, 2, 3 ou 4, comprenant en outre un système de protection pneumatique contre le givrage des ailes (174 ; 474) connecté de manière pneumatique à ladite purge basse pression (160 ; 460) et pouvant fonctionner pour recevoir une pression d'air en provenance de ladite purge basse pression (160 ; 460).
